# EUROPÄISCHE PATENTSCHRIFT

(11) **EP 3 208 109 B1**
(45) Veröffentlichungstag und Bekanntmachung des Hinweises auf die Patenterteilung: **09.10.2019**
(21) Anmeldenummer: 16204911.8
(22) Anmeldetag: 19.12.2016
(51) Int. Cl.: B60C 9/20, B60C 9/00, B60C 9/28

(54) **FAHRZEUGLUFTREIFEN**
PNEUMATIC TYRES FOR A VEHICLE
PNEUMATIQUES DE VÉHICULE

(30) Priorität: 16.02.2016 DE 102016202295
(43) Veröffentlichungstag der Anmeldung: 23.08.2017
(73) Patentinhaber: Continental Reifen Deutschland GmbH, 30165 Hannover (DE)
(72) Erfinder: Volk, Heiner, 31535 Neustadt (DE); Strübel, Christian, 30559 Hannover (DE); Wenckel, Mathias, 30625 Hannover (DE)
(74) Vertreter: Finger, Karsten

(56) Entgegenhaltungen:
- DE-A1-102010 038 199
- DE-A1-102013 107 475

## Beschreibung

Die Erfindung betrifft einen Fahrzeugluftreifen in Radialbauart, insbesondere für Personenkraftwagen, mit einem Gürtelverband aus zumindest zwei Gürtellagen, einem profilierten Laufstreifen, Wulstbereichen mit Wulstkernen und einer insbesondere einlagig ausgeführten Karkasseinlage mit textilen Festigkeitsträgern, wobei die Gürtellagen in eine Gummierungsmischung eingebettete parallel und beabstandet zueinander angeordnete Festigkeitsträger aus Stahl aufweisen, wobei die Stahl-Festigkeitsträger in der ersten Gürtellage die Stahl-Festigkeitsträger in der zweiten Gürtellage kreuzen und wobei zwischen der Karkasseinlage und der ersten Gürtellage, symmetrisch zur Äquatorialebene, ein Verstärkungsstreifen eingebaut ist, welcher eine Breite kleiner als 30% der Breite der ersten Gürtellage aufweist und welcher Festigkeitsträger enthält, die parallel zueinander und unter einem Winkel von 50° bis 90° zur Umfangsrichtung verlaufen.

Ein derartiger PKW-Fahrzeugluftreifen in Radialbauart ist aus der DE 10 2013 107 475 A1 bekannt. Dieser Reifen weist Gürtellagen mit Stahlkorden als Festigkeitsträger auf. Zwischen der Karkasseinlage und der ersten Gürtellage befindet sich ein Verstärkungsstreifen, welcher in axialer Richtung eine Breite von mindestens 15,0 mm und von höchstens 50% der Breite der ersten Gürtellage aufweist. Die parallel zueinander ausgerichteten Festigkeitsträger des Verstärkungsstreifens bestehen aus einem textilen Material und verlaufen zur Umfangsrichtung unter einem Winkel von 20° bis 90°. Dieser Reifen soll eine erhöhte Durchschlagfestigkeit bei geringem Materialverbrauch unter Schaffung größerer Freiräume für die Profilgestaltung ermöglichen.

Aus der DE 10 2010 038 199 A1 ist ein weiterer PKW-Fahrzeugluftreifen bekannt. Die Festigkeitsträger in den beiden Gürtellagen sind Stahl-Monofilamente mit einem runden Querschnitt mit einem Durchmesser von 0,35 mm. Das Gürtelpaket umfasst eine dritte Gürtellage in der Funktion einer Sperrlage, welche zumindest im Bereich der Äquatorialebene des Fahrzeugluftreifens angeordnet ist, wobei die Festigkeitsträger in dieser dritten Gürtellage Stahl-Monofilamente mit einem Durchmesser von 0,20 mm bis 0,60 mm sind, die parallel zueinander und unter einem Winkel von 50° bis 90° zur der Umfangsrichtung des Fahrzeugluftreifens verlaufen. Die Breite dieser dritten Gürtellage beträgt 30% bis 110% der Breite der ersten Gürtellage und kann radial innerhalb oder radial außerhalb im Gürtelpaket angeordnet sein.

Ein derart ausgeführter Fahrzeugluftreifen soll eine rollwiderstandsoptimierte Gürtelkonstruktion aufweisen, die die Seitenführungskraft auf einem hohen Niveau hält oder verbessert und zudem dazu beiträgt, dass der Fahrzeugluftreifen den so genannten Plungertest besteht. Der Plungertest ist eine statische Prüfung der Festigkeit des Fahrzeugluftreifens gegenüber penetrierenden Fahrbahnhindernissen und wird mittels eines ein- oder durchdrückenden Stahldornes, welcher ein halbkugeliges Ende aufweist, durchgeführt, wobei der Stahldorn im Bereich der Äquatorialebene des Reifens auf den Laufstreifen senkrecht aufgesetzt und mit einer vorgegebenen Eindringgeschwindigkeit eingedrückt wird. Dieser bekannte Fahrzeugluftreifen genügt jedoch den heutigen Anforderungen hinsichtlich eines möglichst geringen Rollwiderstandes nicht mehr, es wäre daher notwendig, das Gewicht von PKW-Reifen zur Reduktion des Rollwiderstandes noch mehr zu verringern, insbesondere indem in den den Reifen verstärkenden Lagen, insbesondere Gürtellagen und Karkasslagen, Gewicht verringert wird. Es ist bekannt, dass durch solche Maßnahmen die Steifigkeit des Fahrzeugluftreifens im Bereich des Reifenzenites merklich reduziert wird, was bei den meisten Reifen zu einer Verringerung der Seitenkraftsteifigkeit führt, insbesondere der "cornering stiffness".

Der Erfindung liegt daher die Aufgabe zugrunde, einen Fahrzeugluftreifen der eingangs genannten Art derart zu auszuführen, dass eine weitere Verringerung des Gewichtes der Gürtellagen und damit des Rollwiderstandes möglich ist, ohne dass das Fahrzeughandling, insbesondere die "cornering stiffness", beeinträchtigt wird.

Gelöst wird die gestellte Aufgabe erfindungsgemäß dadurch, dass die Festigkeitsträger im Verstärkungsstreifen Stahl-Monofilamente mit einem Durchmesser von 0,20 mm bis 0,40 mm sind und dass die Stahl-Festigkeitsträger in den Gürtellagen Monofilamente mit einem Durchmesser von 0,20 mm bis 0,40 mm oder Stahlkorde der Konstruktion 2 x 0,28 mm bis 2 x 0,32 mm sind.

Es hat sich herausgestellt, dass durch entsprechende Stahl-Festigkeitsträger in den Gürtellagen das Gewicht des Fahrzeugluftreifens weiter verringert werden kann und dass ein verhältnismäßig schmaler Verstärkungsstreifen im Zenitbereich des Reifens ausreicht, um die Handlingeigenschaften des Reifens auf gutem Niveau zu halten, insbesondere einen schnellen Aufbau von Seitenkräften und eine gute "cornering stiffness" sicherzustellen. Das verringerte Gewicht reduziert in erwünschter Weise den Rollwiderstand des Reifens.

Bei einer bevorzugten Ausführungsform der Erfindung weist der Verstärkungsstreifen eine Breite von 20 mm bis 50 mm, insbesondere bis 40 mm, auf. Verstärkungsstreifen mit Breiten in diesem Bereich sind zwar relativ schmal können jedoch die erwünschten technischen Effekte, insbesondere gute Handlingeigenschaften, sicherzustellen.

Die Ausführung der Festigkeitsträger im Verstärkungsstreifen ist in diesem Zusammenhang ebenfalls von Bedeutung. Besonders bevorzugt ist eine Ausführung, bei der die Festigkeitsträger im Verstärkungsstreifen einen Durchmesser von 0,28 mm bis 0,32 mm, insbesondere bis 0,30 mm, und vorzugsweise von 0,30 mm aufweisen. Ein geringes Gewicht des Fahrzeugluftreifens wird dadurch unterstützt.

Besonders vorteilhaft für ein geringes Gewicht des Fahrzeugluftreifens ist die Verwendung von Monofilamenten als Festigkeitsträger in den Gürtellagen mit einem Durchmesser von 0,28 mm bis 0,32 mm, insbesondere von 0,30 mm.

In den Gürtellagen erfindungsgemäßer Fahrzeugluftreifen können auch gängige und bewährte Stahlkorde als Festigkeitsträger eingesetzt werden. Zu solchen Stahlkorden gehören Stahlkorde der Konstruktionen 2 x 0,28 mm, 2 x 0,30 mm und 2 x 0,32 mm.

Bei einer weiteren bevorzugten Ausfuhrungsform der Erfindung weisen die Stahl-Monofilamente in den Gürtellagen den gleichen Durchmesser auf wie die Stahl - Monofilamente im Verstärkungsstreifen. Diese Maßnahme vereinfacht die Herstellung erfindungsgemäßer Fahrzeugluftreifen und gestatten es, bei entsprechender Wahl des Durchmessers der Stahl-Monofilamente, die Gürtellagen und die Verstärkungsstreifen besonders dünn auszuführen.

Auch bei erfindungsgemäß ausgeführten Fahrzeugluftreifen können die Festigkeitsträger in den Gürtellagen unter einem für Festigkeitsträger in Gürtellagen üblichen Winkel zur Umfangsrichtung verlaufen, insbesondere unter einem Winkel von 18° bis 34°, vorzugsweise von 20° bis 28°. Bezüglich der Festigkeitsträger im Verstärkungsstreifen ist es vorteilhaft, wenn diese unter einem Winkel zur Umfangsrichtung verlaufen, welcher größer ist, insbesondere um mindestens 15° größer ist, als der Winkel, unter welchem die Festigkeitsträger in den Gürtellagen zur Umfangsrichtung verlaufen. Der erwähnte Winkel der Festigkeitsträger im Verstärkungsstreifen zur Umfangsrichtung kann bis zu 70° betragen.

Erfindungsgemäß ausgeführte Fahrzeugluftreifen können auch Reifen für Vans oder Light-Trucks sein.

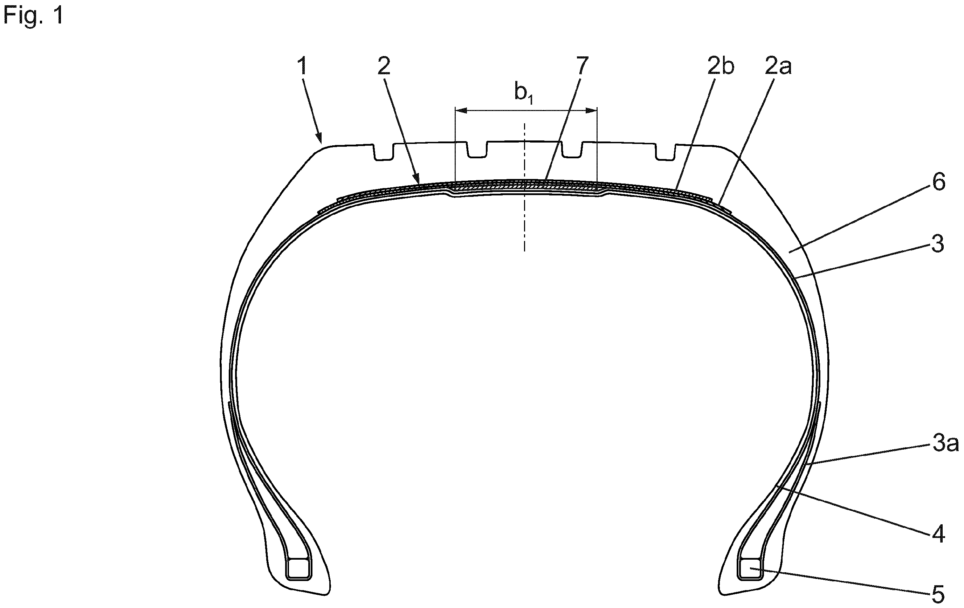

Weitere Merkmale, Vorteile und Einzelheiten der Erfindung werden nun anhand der einzigen Zeichnungsfigur, Fig. 1, die schematisch einen Querschnitt durch einen Fahrzeugluftreifen zeigt, näher beschrieben.

Erfindungsgemäß ausgeführte Fahrzeugluftreifen sind C1- oder C2-Reifen, daher Reifen für PKW, Vans oder Light Trucks, in Radialbauart. In dem in Fig. 1 gezeigten Querschnitt sind einige der wesentlichen Bauteile eines solchen Fahrzeugluftreifens dargestellt, nämlich ein profilierter Laufstreifen 1, eine Gürtelverband 2 aus mehreren, insbesondere zwei, Gürtellagen 2a, 2b, eine vorzugsweise einlagig ausgeführte Karkasseinlage 3, eine luftdichte Innenschicht 4, Wulstbereiche mit Wulstkernen 5 und Seitenwände 6. Der Gürtelverband 2 kann ferner eine nicht dargestellte, ein- oder mehrlagig ausgeführte Gürtelbandage mit zumindest im Wesentlichen in Umfangsrichtung verlaufenden Festigkeitsträgern aus einem textilen Material, beispielsweise Nylon, aufweisen. Der profilierte Laufstreifen 1 kann in an sich bekannter Weise Profilblöcke, Profilrippen und dergleichen sowie Umfangsrillen, Querrillen, sonstige Nuten und Einschnitte umfassen.

Die Karkasseinlage 3 enthält insbesondere textile Festigkeitsträger, beispielsweise aus Polyester oder Rayon, welche in eine Gummimischung, die Karkassgummierung, eingebettet sind und in der Karkasseinlage 3 zumindest im Wesentlichen in radialer Richtung, daher im rechten Winkel zur Umfangsrichtung des Reifens, verlaufen. Die Karkasseinlage ist in jedem Wulstbereich um den Wulstkern 5 herumgeschlagen, die derart gebildeten Karkasshochschläge 3a enden im Bereich der Seitenwände 6.

Die Gürtellagen 2a, 2b enthalten Stahl- Festigkeitsträger, die entweder Monofilamente mit einem Durchmesser von 0,20 mm bis 0,40 mm oder Stahlkorde der Konstruktion 2 x 0,28 mm bis 2 x 0,32 mm sind. Bevorzugt sind im Querschnitt runde Monofilamente mit einem Durchmesser von 0,28 mm bis 0,32 mm, insbesondere von 0,30 mm, oder Stahlkorde der Konstruktion 2 x 0,28 mm, 2 x 0,30 mm 2 x 0,32 mm. Die Stahl- Festigkeitsträger verlaufen in jeder Gürtellage 2a, 2b jeweils parallel zueinander und unter einem Winkel von 18° bis 34°, insbesondere 20° bis 28°, zur Umfangsrichtung des Reifens. Der Verlauf der Stahl- Festigkeitsträger in den beiden Gürtellagen 2a, 2b ist dabei in an sich bekannter Weise derart, dass die Stahl- Festigkeitsträger in der einen Gürtellage 2a die Stahl-Festigkeitsträger in der zweiten Gürtellage 2b kreuzen.

Im Bereich des Reifenzenites verläuft symmetrisch zur Äquatorialebene zwischen der Karkasseinlage 3 und der ersten, der radial innersten Gürtellage 2a ein Verstärkungsstreifen 7 über den Umfang des Reifens. Der Verstärkungsstreifen 7 weist eine über seine Umfangserstreckung konstante Breite b₁ auf, die kleiner als 30 % der Breite der ersten Gürtellage 2a ist, wobei die Breite b₁ je nach Reifentyp 20 mm bis 50 mm beträgt. Der Verstärkungsstreifen 7 besteht aus in eine Gummierungsmischung eingebetteten, parallel zueinander verlaufenden Festigkeitsträgern aus Stahl, die unter einem relativ großen Winkel von 50° bis 90°, insbesondere von bis zu 70°, zur Umfangsrichtung orientiert sind, wobei bei einer bevorzugten Ausführungsform die Festigkeitsträger im Verstärkungsstreifen 7 die Stahl- Festigkeitsträger in der ersten Gürtellage 2a kreuzen. Die Stahl- Festigkeitsträger im Verstärkungsstreifen 7 sind im Querschnitt runde Stahl-Monofilamente mit einem Durchmesser von 0,20 mm bis 0,40 mm, insbesondere von 0,28 mm bis 0,32 mm, vorzugsweise von 0,30 mm.

Gemäß der Erfindung werden in den Gürtellagen 2a, 2b relativ dünne und leichte Stahl-Festigkeitsträger verwendet, insbesondere Monofilamente mit einem Durchmesser von bis zu 0,30 mm, wodurch das Gewicht des Fahrzeugluftreifens und damit auch der Rollwiderstand geringer sind als bei herkömmlichen Ausführungen. Der schmale Verstärkungsstreifen 7 im Bereich des Reifenkopfes hat sich als ausreichend herausgestellt, um gute Handlingeigenschaften, insbesondere eine gute cornering stiffness, sicherzustellen.

### Bezugsziffernliste

- 1: Laufstreifen
- 2: Gürtelverband
- 2a: Gürtellage
- 2b: Gürtellage
- 3: Karkasseinlage
- 4: Innenschicht
- 5: Kern
- 6: Seitenwand
- 7: Verstärkungsstreifen
- b₁: Breite

## Patentansprüche

1. Fahrzeugluftreifen in Radialbauart, insbesondere für Personenkraftwagen, mit einem Gürtelverband (2) aus zumindest zwei Gürtellagen (2a, 2b), einem profilierten Laufstreifen (1), Wulstbereichen mit Wulstkernen (5) und einer insbesondere einlagig ausgeführten Karkasseinlage (3) mit textilen Festigkeitsträgern, wobei die Gürtellagen (2a, 2b) in eine Gummierungsmischung eingebettete parallel und beabstandet zueinander angeordnete Festigkeitsträger aus Stahl aufweisen, wobei die Stahl-Festigkeitsträger in der ersten Gürtellage (2a) die Stahl-Festigkeitsträger in der zweiten Gürtellage (2a, 2b) kreuzen und wobei zwischen der Karkasseinlage (3) und der ersten Gürtellage (2a, 2b), symmetrisch zur Äquatorialebene, ein Verstärkungsstreifen (7) eingebaut ist, welcher eine Breite (b₁) kleiner als 30% der Breite der ersten Gürtellage (2a) aufweist und welcher Festigkeitsträger enthält, die parallel zueinander und unter einem Winkel von 50° bis 90° zur Umfangsrichtung verlaufen,
**dadurch gekennzeichnet,**
**dass** die Festigkeitsträger im Verstärkungsstreifen (7) Stahl-Monofilamente mit einem Durchmesser von 0,20 mm bis 0,40 mm sind und dass die Stahl-Festigkeitsträger in den Gürtellagen (2a, 2b) Monofilamente mit einem Durchmesser von 0,20 mm bis 0,40 mm oder Stahlkorde der Konstruktion 2 x 0, 28 mm bis 2 x 0,32 mm sind.

2. Fahrzeugluftreifen nach Anspruch 1 **dadurch gekennzeichnet, dass** der Verstärkungsstreifen (7) eine Breite (b₁) von 20 mm bis 50 mm, insbesondere bis 40 mm, aufweist.

3. Fahrzeugluftreifen nach Anspruch 1 oder 2, **dadurch gekennzeichnet, dass** die Festigkeitsträger im Verstärkungsstreifen (7) Stahl-Monofilamente mit einem Durchmesser von 0,28 mm bis 0,32 mm, insbesondere bis 0,30 mm, und vorzugsweise von 0,30 mm, sind.

4. Fahrzeugluftreifen nach Anspruch 1 oder 2, **dadurch gekennzeichnet, dass** die Monofilamente in den Gürtellagen (2a, 2b) einen Durchmesser von 0,28 mm bis 0,32 mm, insbesondere von 0,30 mm, aufweisen.

5. Fahrzeugluftreifen nach einem der Ansprüche 1 bis 3, **dadurch gekennzeichnet, dass** die Stahlkorde in den Gürtellagen (2a, 2b) die Konstruktion 2 x 0,28 mm aufweisen.

6. Fahrzeugluftreifen nach einem der Ansprüche 1 bis 3, **dadurch gekennzeichnet, dass** die Stahlkorde in den Gürtellagen (2a, 2b) die Konstruktion 2 x 0,30 mm aufweisen.

7. Fahrzeugluftreifen nach einem der Ansprüche 1 bis 3, **dadurch gekennzeichnet, dass** die Stahlkorde in den Gürtellagen (2a, 2b) die Konstruktion 2 x 0,32 mm aufweisen.

8. Fahrzeugluftreifen nach einem der Ansprüche 1 bis 3, **dadurch gekennzeichnet, dass** die Stahl-Monofilamente in den Gürtellagen (2a, 2b) den gleichen Durchmesser aufweisen wie die Stahl-Monofilamente im Verstärkungsstreifen (7).

9. Fahrzeugluftreifen nach einem der Ansprüche 1 bis 5, **dadurch gekennzeichnet, dass** die Festigkeitsträger in den Gürtellagen (2a, 2b) unter einem Winkel von 18° bis 34°, insbesondere von 20° bis 28°, zur Umfangsrichtung verlaufen.

10. Fahrzeugluftreifen nach einem der Ansprüche 1 bis 5, **dadurch gekennzeichnet, dass** die Festigkeitsträger im Verstärkungsstreifen (7) unter einem Winkel von bis zu 70° zur Umfangsrichtung verlaufen.

11. Fahrzeugluftreifen nach einem der Ansprüche 1 bis 10, **dadurch gekennzeichnet, dass** er ein Reifen für Vans oder Light-Trucks ist.

## Claims

1. Pneumatic vehicle tyre of a radial type of construction, in particular for passenger cars, with a breaker belt assembly (2) comprising at least two belt plies (2a, 2b), a profiled tread (1), bead regions with bead cores (5) and a carcass insert (3) in particular of a single-ply configuration, with textile reinforcing elements, the belt plies (2a, 2b) comprising reinforcing elements of steel embedded in a rubberising mixture and arranged in parallel and at a distance from one another, the steel reinforcing elements in the first belt ply (2a) crossing the steel reinforcing elements in the second belt ply (2a, 2b), and there being incorporated between the carcass insert (3) and the first belt ply (2a, 2b), symmetrically in relation to the equatorial plane, a bracing strip (7), which has a width (b₁) of less than 30% of the width of the first belt ply (2a) and which contains reinforcing elements parallel to one another and at an angle of 50° to 90° to the circumferential direction,
**characterized**
**in that** the reinforcing elements in the bracing strip (7) are steel monofilaments with a diameter of 0.20 mm to 0.40 mm and in that the steel reinforcing elements in the belt plies (2a, 2b) are monofilaments with a diameter of 0.20 mm to 0.40 mm or steel cords of the construction 2 x 0.28 mm to 2 x 0.32 mm.

2. Pneumatic vehicle tyre according to Claim 1, **characterized in that** the bracing strip (7) has a width (b₁) of 20 mm to 50 mm, in particular to 40 mm.

3. Pneumatic vehicle tyre according to Claim 1 or 2, **characterized in that** the reinforcing elements in the bracing strip (7) are steel monofilaments with a diameter of 0.28 mm to 0.32 mm, in particular to 0.30 mm, and preferably of 0.30 mm.

4. Pneumatic vehicle tyre according to Claim 1 or 2, **characterized in that** the monofilaments in the belt plies (2a, 2b) have a diameter of 0.28 mm to 0.32 mm, in particular of 0.30 mm.

5. Pneumatic vehicle tyre according to one of Claims 1 to 3, **characterized in that** the steel cords in the belt plies (2a, 2b) have the construction 2 x 0.28 mm.

6. Pneumatic vehicle tyre according to one of Claims 1 to 3, **characterized in that** the steel cords in the belt plies (2a, 2b) have the construction 2 x 0.30 mm.

7. Pneumatic vehicle tyre according to one of Claims 1 to 3, **characterized in that** the steel cords in the belt plies (2a, 2b) have the construction 2 x 0.32 mm.

8. Pneumatic vehicle tyre according to one of Claims 1 to 3, **characterized in that** the steel monofilaments in the belt plies (2a, 2b) have the same diameter as the steel monofilaments in the bracing strip (7).

9. Pneumatic vehicle tyre according to one of Claims 1 to 5, **characterized in that** the reinforcing elements in the belt plies (2a, 2b) run at an angle of 18° to 34°, in particular of 20° to 28°, to the circumferential direction.

10. Pneumatic vehicle tyre according to one of Claims 1 to 5, **characterized in that** the reinforcing elements in the bracing strip (7) run at an angle of up to 70° to the circumferential direction.

11. Pneumatic vehicle tyre according to one of Claims 1 to 10, **characterized in that** it is a tyre for vans or light trucks.

## Revendications

1. Pneumatique de véhicule de type radial, destiné en particulier à des voitures de tourisme, comprenant une bande d'armature (2) comprenant au moins deux couches d'armature (2a, 2b), une bande de roulement profilée (1), des zones de talon comportant des tringles de talon (5) et une couche de carcasse (3) notamment monocouche comportant des supports de renforcement textiles, les couches d'armature (2a, 2b) comportant des supports de renforcement en acier noyés dans un mélange de caoutchoucs et disposés parallèlement à distance les uns des autres, les supports de renforcement en acier de la première couche d'armature (2a) croisant les supports de renforcement en acier de la deuxième couche d'armature (2a, 2b) et une bande de renforcement (7), qui a une largeur (b₁) inférieure à 30 % de la largeur de la première couche d'armature (2a) et qui contient des supports de renforcement s'étendant parallèlement les uns aux autres et formant un angle de 50° à 90° par rapport à la direction circonférentielle, étant incorporée entre la couche de carcasse (3) et la première couche d'armature (2a, 2b), symétriquement au plan équatorial,
**caractérisé en ce que**
les supports de renforcement de la bande de renforcement (7) sont des monofilaments en acier ayant un diamètre de 0,20 mm à 0,40 mm et **en ce que** les supports de renforcement en acier des couches d'armature (2a, 2b) sont des monofilaments ayant un diamètre de 0,20 mm à 0,40 mm ou des cordons en acier de la structure de 2 x 0,28 mm à 2 x 0,32 mm.

2. Pneumatique de véhicule selon la revendication 1, **caractérisé en ce que** la bande de renforcement (7) a une largeur (b₁) de 20 mm à 50 mm, en particulier jusqu'à 40 mm.

3. Pneumatique de véhicule selon la revendication 1 ou 2, **caractérisé en ce que** les supports de renforcement de la bande de renforcement (7) sont des monofilaments en acier ayant un diamètre de 0,28 mm à 0,32 mm, notamment jusqu'à 0,30 mm, de préférence de 0,30 mm.

4. Pneumatique de véhicule selon la revendication 1 ou 2, **caractérisé en ce que** les monofilaments des couches d'armature (2a, 2b) ont un diamètre de 0,28 mm à 0,32 mm, en particulier de 0,30 mm.

5. Pneumatique de véhicule selon l'une des revendications 1 à 3, **caractérisé en ce que** les cordons en acier des couches d'armature (2a, 2b) ont la construction de 2 x 0,28 mm.

6. Pneumatique de véhicule selon l'une des revendications 1 à 3, **caractérisé en ce que** les cordons en acier des couches d'armature (2a, 2b) ont la construction de 2 x 0,30 mm.

7. Pneumatique de véhicule selon l'une des revendications 1 à 3, **caractérisé en ce que** les cordons en acier des couches d'armature (2a, 2b) ont la construction de 2 x 0,32 mm.

8. Pneumatique de véhicule selon l'une des revendications 1 à 3, **caractérisé en ce que** les monofilaments en acier des couches d'armature (2a, 2b) ont le même diamètre que les monofilaments en acier de la bande de renforcement (7).

9. Pneumatique de véhicule selon l'une des revendications 1 à 5, **caractérisé en ce que** les supports de renforcement des couches d'armature (2a, 2b) forment un angle de 18° à 34°, en particulier de 20° à 28°, par rapport à la direction circonférentielle.

10. Pneumatique de véhicule selon l'une des revendications 1 à 5, **caractérisé en ce que** les supports de renforcement de la bande de renforcement (7) s'étendent en formant un angle pouvant aller jusqu'à 70° par rapport à la direction circonférentielle.

11. Pneumatique de véhicule selon l'une des revendications 1 à 10, **caractérisé en ce qu'**il s'agit d'un pneumatique pour fourgonnette ou camion léger.
